# EUROPÄISCHE PATENTSCHRIFT

(11) **EP 0 462 481 B1**
(45) Veröffentlichungstag und Bekanntmachung des Hinweises auf die Patenterteilung: **28.08.1996**
(21) Anmeldenummer: 91109452.2
(22) Anmeldetag: 09.06.1991
(51) Int. Cl.: B29B 13/02, B29C 51/42

(54) **Vorrichtung zum Erhitzen von plattenförmigen Teilen**
Apparatus for heating plate-like parts
Dispositif pour le chauffage de pièces en forme de plaques

(30) Priorität: 20.06.1990 DE 4019632
(43) Veröffentlichungstag der Anmeldung: 27.12.1991
(73) Patentinhaber: Tetra Laval Holdings & Finance SA, 1009 Pully (CH)
(72) Erfinder: Reil, Wilhelm, 6140 Bensheim (DE); Deutschbein, Ulrich, 6109 Mühltal (DE); Knobloch, Gerd, 6103 Griesheim (DE); Liebram, Udo, 6102 Pfungstadt (DE)
(74) Vertreter: Weber, Dieter, Dr.

(56) Entgegenhaltungen:
- EP-A- 0 081 781
- EP-A- 0 268 720
- WO-A-88/07921
- US-A- 3 353 219

## Beschreibung

Die Erfindung betrifft eine Vorrichtung zum Erhitzen von plattenförmigen Teilen aus tiefziehfähigem Kunststoff, wobei zwei Trägerplatten wenigstens senkrecht zu einer gemeinsamen Berührungsfläche relativ zueinander bewegbar sind und Gasführungslietungen in der Oberfläche der Trägerplatte münden.

Zum Verschweißen oder auch zum Tiefziehen von plattenförmigen Teilen aus tiefziehfähigem Kunststoff besteht betriebsintern und in der allgemeinen Technik das Bedürfnis, mit einer Vorrichtung der vorstehend genannten Art plattenförmige Teile zu verarbeiten. Unter dem Begriff "plattenförmig" sind flache oder flächig ausgestaltete Werkstücke zu verstehen, welche z.B. die Form von Tellern, Scheiben, Stegen, Leisten oder Platten haben. Derartige plattenförmige Teile aus tiefziehfähigem Kunststoff verbindet man dadurch miteinander bzw. erwärmt man dadurch zum Tiefziehen, daß man sie mit sogenannten Trägerplatten in Berührung bringt, so daß die Wärmeenergie von den Trägerplatten durch Berührung auf die plattenförmigen Werkstücke übergeht. Man hat auch schon daran gedacht, alternativ oder zusätzlich heiße Gase, vorzugsweise Warmluft, auf das zu erhitzende, plattenförmige Werkstück aufzubringen, um die Erwärmung bzw. Erhitzung zu verbessern oder zu beschleunigen. Nach dem Erhitzen werden die zwei einander gegenüberstehenden Trägerplatten, die beim Zusammenfahren eine gemeinsame Berührungsfläche haben, so relativ auseinanderbewegt, daß die plattenförmigen Teile oder Werkstücke abgenommen und weiteren Bearbeitungsstationen zugeführt werden können.

Mit Nachteil hat sich bei Versuchen jedoch gezeigt, daß die zu erhitzenden plattenförmigen Werkstücke an der z.B. ebenen Berührungsfläche wenigstens einer - oder bei besonders schlechten Ausführungen zwei -Trägerplatte/n haften bleiben. Bei diesen Versuchen hat man nun auch Gasführungsleitungen in den Trägerplatten so angeordnet, daß diese Leitungen in der Berührungsfläche in Form von Öffnungen münden, so daß zum Ablösen eines plattenförmigen Teils Druckluft zu Hilfe genommen werden kann. Trotz dieser Maßnahme ist es nicht immer gelungen, die erhitzten plattenförmigen Werkstücke einwandfrei von der Berührungsfläche der Trägerplatte zu lösen. Es hat sich beispielsweise mit Nachteil gezeigt, daß die eingeblasene Luft zum Ablösen des plattenförmigen Teiles oder Zuschnittes von der Trägerplatte an der Stelle entweicht, wo das Ablösen bereits erfolgt ist, und dann an anderen Stellen nicht mehr das Ablösen unterstützt, wo noch eine starke Haftung zwischen dem erweichten plattenförmigen Werkstück und der Trägerplatte vorhanden ist. Der gesamte Luftdruck baut sich an der besagten Leckagestelle ab, so daß diese Gasfürhrungsleitungen nichts nützten.

Auch wenn man die Trägerplatte an der Berührungsfläche mit einem Kunststoff beschichtet. wie z.B. Teflon, gelingt das Ablösen des plattenförmigen Werkstückes nicht in der gewünschten Weise. Es hat sich in der Praxis sogar gezeigt, daß das plattenförmige, erweichte Werkstück an der Teflonbeschichtung hängenbleibt und zusammen mit dieser von der Trägerplatte mit Hilfe Druckluft abgelöst wird, ohne daß ganzflächig ein gutes Ablösen des plattenförmigen Werkstückes allein erreicht würde.

Aus dem Dokument EP-A-0.081.781 ist eine Vorrichtung der eingangs genannten Art bekannt, die allerdings nur mittelbar dem Erhitzen dient, weil hauptsächlich die Oberflächen von Kunststoffhohlkörpern verformt werden sollen. Das Abführen von Gas durch entsprechende Leitungen durch einen mikroporösen Formkörper dient wie beim Tiefziehen dem Andrücken der erweichten Kunststoffplatte an die formende Oberfläche des Formwerkzeuges. Beispielsweise werden Blendschutzfelder mit der bekannten Vorrichtung geformt und mit einer entsprechenden Oberflächenkontur versehen. Wie bei allen Tiefziehvorrichtungen werden auch hier die Werkstückteile über die Größe des fertigen Produktes am Rand nach außen vergrößert geschnitten und eingelegt, damit sie am Umfang festklemmbar sind. Insofern hat die bekannte Vorrichtung nicht eigentlich Berührungsflächen. Außerdem sind die Werkstückteile durch ihren erheblichen Rauminhalt (Verkleidungsteile in Kraftfahrzeugen Blendschutz usw.) mit einer gewissen Eigensteifigkeit versehen, so daß sich Schwierigkeiten beim Ablösen nach dem Erhitzen der Werkstücke nicht ergeben.

Indessen zeigen sich die vorstehend erwähnten Probleme beim Ablösen der Trägerplatte bei den meisten anderen plattenförmigen Werkstücken, sofern sie keine Eigensteifigkeit und inneren Leerraum haben.

Es ist daher Aufgabe der Erfindung, eine nur dem Erhitzen dienende Vorrichtung der eingangs genannten Art zu schaffen, bei welcher sich die plattenförmigen Werkstückteile gut von den Heizplatten lösen lassen, so daß Beschädigungen der Erhitzungsvorrichtung vermieden werden und die Standzeit der Vorrichtung vergrößert werden kann.

Diese Aufgabe wird erfindungsgemäß dadurch gelöst, daß die Berührungsfläche beider Trägerplatten jeweils von einem rahmenförmigen, geschlossenen Außenrand ohne Mündungsöffnungen der Gasführungsleitungen gebildet ist, wobei dieser Außenrand am Umfang des plattenförmigen Teils eine Gassperre bildet, daß die Gasführungsleitungen im Bereich innerhalb des Außenrandes münden und dem membranartigen Ablösen bzw. Ansaugen des Werkstückteiles dienen und daß die Wärme von den zwei Trägerplatten durch Kontakt und/oder warme Gase an das zu erhitzende Werkstückteil herangebracht wird. Zur Erläuterung dieser Maßnahmen stellt man sich die Berührungsfläche am besten eben vor, wenngleich ein sogar gasdichter Abschluß auch bei in gleicher Weise und zueinander passend gebogenen bzw. gekrümmten Berührungsflächen zweier Trägerplatten erreicht werden könnte. Auch eine solche Ausführungsform wird von der vorliegenden Erfindung erfaßt, zur Erläuterung genügt aber die einfachere Vorstellung einer ebenen Berührungsfläche. Zum Erhitzen plattenförmiger Werkstücke aus tiefziehfähigem Kunststoff wird diese vorzugsweise gasundurchlässige Kunststoffplatte zwischen zwei relativ zusammen- und auseinanderbewegbare Trägerplatten gebracht, wobei erfindungsgemäß die Berührungsfläche in Form eines Rahmens am Umfang der Trägerplatte, wie ein Rand, die Kunststoffplatte umgibt. Dieser Außenrand ist ohne Mündungsöffnungen von Gasführungsleitungen ausgebildet, so daß durch diesen Außenrand, der wie eine Schleife auch in sich geschlossen ist und sich am Umfang der Kunststoffplatte befindet, eine Gassperre gebildet wird. Im Bereich innerhalb des Außenrandes befinden sich Mündungsöffnungen der Gasführungsleitungen, wodurch eine solche Gasbarriere gestört sein könnte. Durch die erfindungsgemäßen Maßnahmen ist aber sichergestellt, daß die zu erhitzende Kunststoffplatte im Bereich des geschlossenen Außenrandes zwischen zwei Trägerplatten so eingelegt ist, daß das Werkstück, d.h. die Kunststoffplatte, wie eine Membran am Rand gehalten ist. Die Kunststoffplatte kann sich wie ein Trommelfell oder eine Membran verhalten mit der vorteilhaften Folge, daß bei entsprechendem Einleiten von Gasen in die eine Trägerplatte und Absaugen von Gasen auf der gegenüberliegenden Trägerplatte die Kunststoffplatte, d.h. das erhitzte Werkstück, einwandfrei von der einen Trägerplatte gelöst werden kann. Beim Ansaugen an die gegenüberliegende Trägerplatte kann die Kunststoffplatte sogar dort festgehalten werden. Die nachteiligen Beschädigungen der vorstehend beschriebenen Vorrichtung dadurch, daß die erhitzte Kunststoffplatte teilweise an der Trägerplatte hängen bleibt und sich infolge ihres erweichten und klebrigen Zustandes nicht löst, sind ausgeschaltet.

Vorteilhaft ist es gemäß der Erfindung, wenn im Außenrand der Trägerplatte im Abstand von der Außenkante der Trägerplatte nach innen eine Stufe zur Bildung einer die Ränder des plattenförmigen Werkstückteils aufnehmenden Ausnehmung angebracht ist. Bei dieser Ausführungsform berühren sich die beiden Trägerplatten außerhalb der Ausnehmung, in welcher das plattenförmige Werkstückteil liegt. Man kann damit die Trägerplatten mit hoher Preßkraft gegeneinanderdrücken, ohne daß das Werkstück dazwischen dergleichen Pressung unterworfen ist. Vorzugsweise ist die Tiefe der rahmenförmigen Ausnehmung größer als die halbe Dicke des Werkstückes mit der Folge, daß das Werkstück bei zusammengefahrenen Trägerplatten so in den Ausnehmungen liegt, daß es ohne die Preßkraft aufgenommen ist, mit welchen die beiden Trägerplatten gegeneinandergepreßt werden.

Zweckmäßig ist es dabei ferner, wenn erfindungsgemäß die Oberfläche der Trägerplatte im Bereich innerhalb des Außenrandes wenigstens eine im Verhältnis zur Dicke der Trägerplatte seichte Ausnehmung aufweist. Bei einem bevorzugten Ausführungsbeispiel wird eine Kunststoffplatte mit einer Dicke von etwa 2 mm dadurch erhitzt, daß sie zwischen zwei Trägerplatten eingespannt wird. Die Trägerplatten werden beheizt und vorzugsweise sogar mit heißen Gasen beaufschlagt, welche aus den Mündungsöffnungen im Bereich innerhalb des Außenrandes der Berührungsfläche austreten. Diese Mündungsöffnungen befinden sich in dem besagten Bereich innerhalb des Außenrandes, welcher gegenüber der Oberfläche des Außenrandes etwas zurückgenommen ist. Bei dem hier betrachteten Ausführungsbeispiel der Kunststoffplatte von 2 mm Dicke beträgt die Tiefe der seichten Ausnehmung nur 0,5 mm. Dies ist eine geringe Rücknahme gegenüber der Berührungsfläche im Bereich des Außenrandes, so daß diese Ausnehmung nur seicht wird - im Verhältnis zur Dicke der gesamten Trägerplatte, die beispielsweise 20 bis 30 mm beträgt. Mit anderen Worten ist die Tiefe der Ausnehmung an der inneren Oberfläche der Trägerplatte im Bereich innerhalb des Außenrandes nur 1 bis 10%, vorzugsweise 2 bis 5% der Dicke der Trägerplatte selbst. Eine derart seichte Ausnehmung genügt, um die Wirkung des membranartigen Einspannens des plattenförmigen Werkstückes deutlich zu erhöhen mit dem überraschenden Vorteil, daß bei entsprechendem Anblasen von einer Trägerplatte her die sogar erhitzte und erweichte Kunststoffplatte sich ohne weiteres von der inneren Oberfläche der Trägerplatte und auch der Ausnehmung löst. Gerade dieses Lösen aber ist der Zweck der erfindungsgemäßen Maßnahmen, der mithin durch einfache Mittel zuverlässig gewährleistet ist.

Vorteilhaft ist es gemäß der Erfindung ferner, wenn die Trägerplatte im Bereich innerhalb des Außenrandes mindestens einen wenigstens teilweise gasdurchlässigen Einsatz mit einer Ausnehmung zur freien Oberfläche hin aufweist. Vorstehend war zunächst nur von der sogenannten inneren Oberfläche der Trägerplatte die Rede, d.h. derjenigen Oberfläche` welche der entsprechenden Oberfläche der anderen Trägerplatte gegenübersteht. Durch den gasdurchlässigen Einsatz nach den zuletzt genannten Merkmalen wird diese innere Oberfläche der jeweiligen Trägerplatte mit Vorteil jedenfalls im Rahmen des Bereiches innerhalb des Außenrandes gebildet. Mit anderen Worten befindet sich im Bereich innerhalb des Außenrandes ein in der Trägerplatte eingesetztes Werkzeug, nämlich der wenigstens teilweise gasdurchlässige Einsatz. Zwar könnte man dessen freie Oberfläche bündig mit dem Außenrand so gestalten, daß es zu der ebenen oder durchgehend bündigen Berührungsfläche bekannter Vorrichtungen kommt. Dies ist aber nicht der Zweck der Erfindung. Vielmehr wird erfindungsgemäß auch der Einsatz mit einer Ausnehmung versehen, wie vorstehend bereits in Verbindung mit der Trägerplatte beschrieben wurde. Auch der Einsatz weist also auf seiner freien Oberfläche eine seichte Ausnehmung auf, welche eine Tiefe mit den oben angegebenen Maßen beispielsweise annehmen kann. Zur Rückseite hin liegt der Einsatz in der Trägerplatte eingebettet und hat keine freien Oberflächen. Die wenigstens eine freie Oberfläche liegt vielmehr auf derjenigen Seite, wo einerseits die Ausnehmung vorgesehen ist und welche andererseits der gegenüberliegenden Trägerplatte gegenüberliegt. Die Verwendung eines gasdurchlässigen Einsatzes gestattet die Verbesserung des Abblasens oder Ablösens der membranartig eingespannten, erhitzten Kunststoffplatte bei entsprechender Steuerung von warmen Gasen aus der Trägerplatte heraus.

Vom Prinzip her würde es genügen, wenn eine oder einige Mündungsöffnung oder -öffnungen aus der freien Oberfläche des Einsatzes herauskommen, weil dann schon die membranartige Kunststoffplatte gut abgelöst werden kann.

Besonders vorteilhaft ist es aber, wenn der gasdurchlässige Einsatz aus porösem Sintermaterial besteht. Dann ergibt sich ein gleichmäßiges Austreten von Gasen aus diesem Einsatz im Bereich seiner Ausnehmung, so daß das erhitzte plattenförmige Werkstück einwandfrei von der jeweiligen Oberfläche der Trägerplatte bzw. der Oberfläche des in diese eingesetzten Einsatzes abgelöst wird.

Sintern ist in der Technik das Zusammenbacken von Pulvern zu festen Körpern bei Temperaturen, die etwa 2/3 bis 3/4 der absoluten Schmelztemperatur betragen. Dabei wird das Sintergut nicht geschmolzen, bzw. es tritt nur ein teilweises Schmelzen eventuell vorhandener niedrig schmelzender Mischungspartner ein. Die Verfestigung beim Sintervorgang erfolgt durch viskoses Fließen, Verdampfen, Kondensieren und Diffusionsvorgänge an den Grenzflächen der Körnchen.

Für die erfindungsgemäßen Einsatze eignen sich besonders Sintermetalle, das sind Metalle und Legierungen (Sinterlegierungen), welche durch Sintern von Metallpulvern erhalten werden. Außer Sintermetallen kann man auch Feuertestmaterialien, Oxidkeramik, keramische Werkstoffe usw. herstellen. Jedenfalls sind gesinterte Materialien porös und eignen sich daher besonders zur Verteilung von Gasen, die auf der einen Seite durch Druck eingeblasen werden können. Beispielsweise können durch die Gasführungsleitungen erwärmte Gase durch die Mündungsöffnungen auf der inneren Oberfläche der Trägerplatten und von dort in die rückseitigen Poren des Einsatzes eingepreßt werden. Im Bereich der erwähnten seichten Ausnehmung treten diese erwärmten Gase dann an der freien Oberfläche des Einsatzes wieder aus und bewirken daher das erwünschte Ablösen der membranartig zwischen den Trägerplatten eingespannten Kunststoffplatte.

Besonders bevorzugt ist eine Ausführungsform der Erfindung dadurch, daß die Berührungsfläche zweier gegenüberliegender Trägerplatten eben ist, der jeweilige Einsatz plattenförmig ausgestaltet ist und die auf seiner Rückseite befindliche innere Oberfläche der Trägerplatte Mündungsöffnungen der Gasführungsleitungen aufweist.

Dabei ist es besonders günstig, wenn bei weiterer vorteilhafter Ausgestaltung der Erfindung die Berührungsfläche jeder länglich ausgebildeten Trägerplatte im Bereich innerhalb des Außenrandes eine Reihe von im Abstand zueinander angeordneten, parallelen Zwischenrandstegen unter Bildung einer Vielzahl von Ausnehmungen dazwischen aufweist. Diese Maßnahme erlaubt die Erhitzung einer länglichen Kunststoffplatte, um beispielsweise mehrere Behälter an einem Stück aus dieser einen länglichen Platte tiefziehen zu können.

Es ist beispielsweise daran gedacht, eine Vorrichtung zum Tiefziehen von einseitig offenen Schalen aus einem Zuschnitt aus tiefziehfähigem Kunststoff zu schaffen, wobei eine solche Tiefziehvorrichtung sowohl ein Tiefziehwerkzeug als auch einen Gegenbacken hat, die so zueinander bewegbar sind, daß sich zwei der vorstehend erwähnten Trägerplatten eine zeitlang gegenüberstehen, um während dieser Zeit den Erhitzungsvorgang des plattenförmigen Werkstückes vorzunehmen. Die erfindungsgemäße Vorrichtung kann dann zum Erhitzen und anschließenden Tiefziehen von Schalen verwendet werden, die beispielsweise längs ihrer Ränder miteinander verklebt, versiegelt oder anderweitig untrennbar verbunden werden sollen. Aus einer einzigen Kunststoffplatte als Werkstück können dann mehrere offene Schalen gleichzeitig geformt und gegebenenfalls miteinander verbunden und verschlossen werden. Damit kann man gleichzeitig eine Vielzahl von beispielsweise vier, sechs, zehn oder mehr Packungen herstellen, füllen und verschließen.

Weitere Vorteile, Merkmale und Anwendungsmöglichkeiten der vorliegenden Erfindung ergeben sich aus der folgenden Beschreibung eines bevorzugten Ausführungsbeispieles in Verbindung mit den anliegenden Zeichnungen. Es zeigen:
- Figur 1: die Querschnittsansicht durch ein Paar von in Betrieb befindlichen Trägerplatten, von denen eine perspektivisch in Figur 3 gezeigt ist, dort etwa entlang der gestrichelten Linie I-I,
- Figur 2: eine ähnliche Ansicht wie Figur 1, wobei jedoch das plattenförmige Teil, die Werkstückplatte aus Kunststoff, auf die gegenüberliegende Trägerplatte geblasen bzw. gesaugt worden ist,
- Figur 3: perspektivisch eine Trägerplatte mit einer Reihe von 11 hintereinander angeordneten Einsätzen,
- Figur 4: abgebrochen und vergrößert eine Einzelheit entsprechend dem Kreis IV In Figur 3,
- Figur 5: vergrößert und abgebrochen eine Einzelheit entlang der Linie V-V in Figur 3,
- Figur 6: eine der Figur 1 ähnliche Querschnittsansicht durch ein Paar von im Betrieb befindlichen Trägerplatten, jedoch bei einer anderen bevorzugten zweiten Ausführungsform. von denen eine perspektivisch in Figur 7 gezeigt ist, dort etwa entlang der gestrichelten Linie VI-VI,
- Figur 7: perspektivisch eine Trägerplatte mit einer Reihe von elf hintereinander angeordneten Einsätzen und
- Figur 8: vergrößert und abgebrochen eine Einzelheit entsprechend dem Kreis VIII in Figur 7.

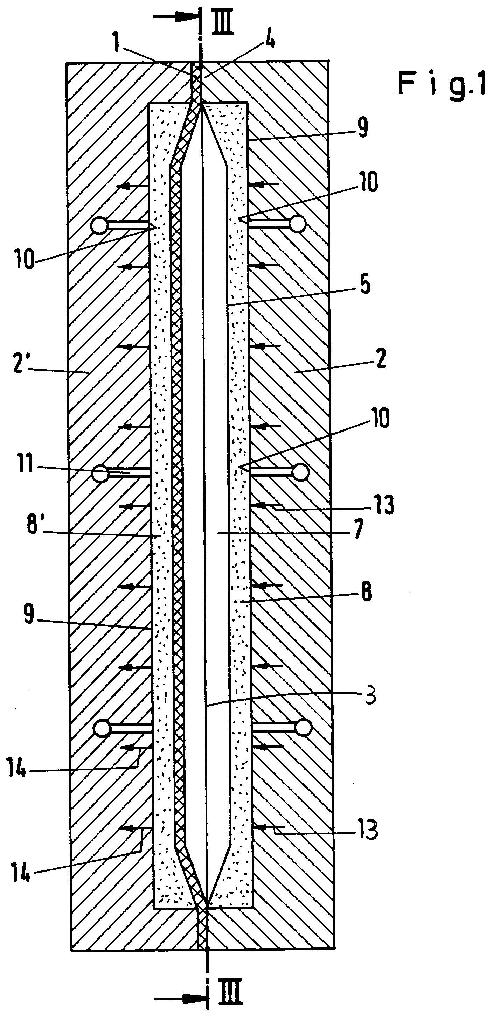

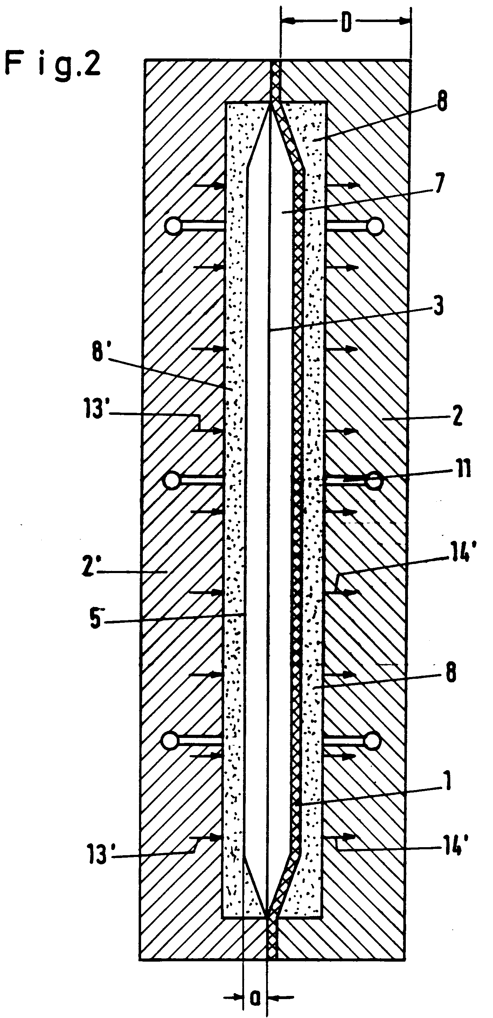

Man kann sich vorstellen, daß eine rechteckige, längliche Platte aus Kunststoff als Werkstück erhitzt werden soll, wobei diese lediglich im Querschnitt dargestellte Kunststoffplatte (plattenförmiges Teil) 1 in zwei verschiedenen Zuständen in den Figuren 1 und 2 dargestellt ist.

Das Material dieses plattenförmigen Teils 1 ist ein tiefziehfähiges Kunststoffmaterial, aus dem man beispielsweise eine Packung herstellen kann. Dieses Material kann ein thermoplastischer Kunststoff sein, z.B. Polypropen. Auch PVC kann als solcher Kunststoff dienen, wobei Polypropen in der Technik weitgehend auch als Polypropylen bekannt ist. Eine aus solchem Kunststoffmateriai hergestellte Platte oder aus dieser Platte tiefgezogene Schale oder auch aus eine aus zwei Schalen gebildete Packung besteht dann aus einwandfrei wiederaufarbeitbaren und leicht verrottbaren Teilen und Materialien (im Gegensatz zu Verbundmaterialien, wie beispielsweise mit Kunststoff beschichtetem Papier). Bei einer besonders bevorzugten Ausführungsform kann man das Kunststoffmaterial, z.B. das Polypropen, auch füllen, wobei als Füllstoffe hier an Kreide, Glimmer, Talkum, Gips oder dergleichen gedacht ist. In der Praxis haben sich Füllgrade von bis zu 70 %, vorzugsweise 60 %, als günstig erwiesen. Es hat sich gezeigt, daß derartige gefüllte Kunststoffmaterialien einerseits leicht verrottbar sind, natürlich auch ohne weiteres und nach einfachen Methoden wieder aufgearbeitet bzw. rezykliert werden können und andererseits die Eigenschaften eines Kunststoffes nicht beeinträchtigen, so daß derartige gefüllte Kunststoffmaterialien insbesondere tiefziehfähig und auch siegelfähig sind.

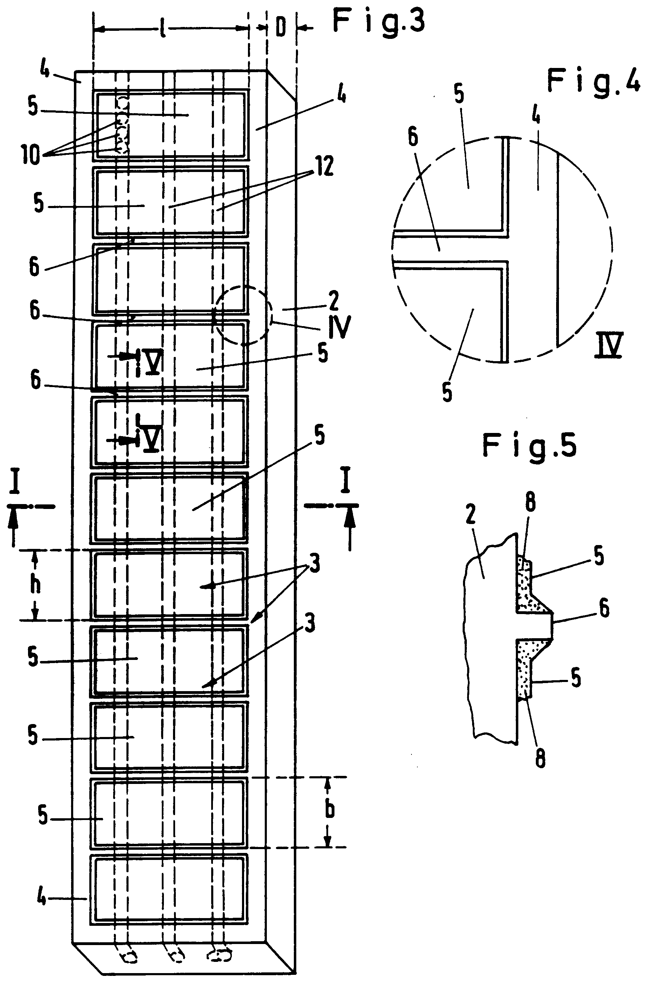

Die in Figur 3 perspektivisch dargestellte Trägerplatte 2 ist in den Figuren 1 und 2 als das rechte Teil anzusehen, während die gegenüberliegende Trägerplatte in den Figuren 1 und 2 mit 2' bezeichnet ist. In Figur 3 blickt man auf die allgemein mit 3 bezeichnete Berührungsfläche, welche sich aus einem rahmenförmigen, geschlossenen Außenrand 4 und der Reihe von im Abstand b voneinander angeordneten, parallel zueinander verlaufenden Zwischenrandstegen 6, durch welche eine Vielzahl der genannten Bereiche 5 gebildet werden, gemäß Darstellung der Figur 3 elf Bereiche 5 durch einen Außenrand 4 und zehn Zwischenrandstegen 6.

Jede Trägerplatte 2, 2' hat die Gestalt eines länglichen Quaders. Legt man die zwei Trägerplatten 2, 2' in der in den Figuren 1 und 2 dargestellten Weise gegeneinander, dann berühren sie sich an der gemeinsamen Berührungsfläche 3, welche in der übertriebenen Darstellung der Figuren 1 und 2 nur mit dem Außenrand 4 übereinzustimmen scheint. Der Bereich 5 innerhalb des Außenrandes 4 steht nur um den Abstand a (Figur 2) von z.B. 0,5 mm gegenüber der gemeinsamen Mittellinie und Berührungsfläche 3 zurück. Das bloße Auge wird kaum diese seichte Ausnehmung mit einer Tiefe a von etwa 0,5 mm wahrnehmen, gleichwohl ist die Bedeutung dieser mit 7 bezeichneten Ausnehmung erheblich. Diese Ausnehmung 7 liegt vor dem Bereich 5 innerhalb des Außenrandes 4.

Die jeweilige Trägerplatte 2 oder 2' ist innen, d.h. auf der der gegenüberliegenden Trägerplatte liegenden Seite mit einer Vertiefung versehen, die beispielsweise durch Fräsen oder dergleichen hergestellt werden kann und teilweise durch einen Einsatz 8 bzw. 8' gefüllt ist. Die regellos verteilten Punkte in den Figuren 1, 2 und 5 deuten an, daß dieser Einsatz 8 porös ist, beispielsweise ein Sintermetall ist. Der Bereich 5 innerhalb des Außenrandes 4 wird bei dieser Ausführungsform durch die Oberfläche des Einsatzes 8 gebildet bzw. die freie Oberfläche des Einsatzes 8 ist gleich diesem Bereich 5 innerhalb des Außenrandes 4. Gleichwohl ist das Material unter dem Außenrand 4 ein Metall, z.B. Aluminium, aus welchem die Trägerplatte 2 oder 2' gebildet ist, während der Einsatz 8 das erwähnte poröse Sintermetall ist.

Die Oberfläche auf der Rückseite des jeweiligen Einsatzes 8, 8' fällt mit der inneren Oberfläche 9 der Trägerplatte 2, 2' zusammen. An dieser Oberfläche befinden sich Mündungsöffnungen 10, welche über Gasführungsleitungen 11 mit Druckluftbohrungen 12 in Verbindung stehen. Auf diese Weise kann Druckluft aus den Druckluftbohrungen 12 über die Gasführungsleitungen 11 an die innere Oberfläche 9 z.B. der Trägerplatte 2 gelangen, um durch den porösen Einsatz 8 und über den Bereich 5 innerhalb des Außenrandes 4 gemäß Pfeilen 13 abzublasen. Umgekehrt gelingt das gleiche über die Trägerplatte 2' (Figur 2) wo die Druckluft dann entsprechend den Pfeilen 13' eingeblasen wird.

Entsprechend kann auf der jeweils gegenüberliegenden Seite die Trägerplatte 2' gemäß Figur 1 für ein Absaugen gemäß der Pfeile 14 oder umgekehrt im Zustand der Figur 2 gemäß Pfeilen 14' sorgen.

Die jeweilige Ausnehmung 7 ist seicht, d.h. sie hat lediglich eine Tiefe a von z.B. 0,5 mm und ist durch Einfräsen oder Erodieren im Einsatz 8, 8' erreicht. Diese Ausnehmung 7 ist seicht im Verhältnis zur Dicke D der Trägerplatte 2, 2', die beispielsweise 20 bis 50 mm, vorzugsweise 25 bis 40 mm dick sein kann.

Bei der praktischen Ausführungsform sind auf der Berührungsfläche 3 der Trägerplatte 2 (Figur 3) elf Einsätze 8 mit jeweils einer Länge l von 200 mm und einer Höhe h von 100 mm angeordnet. Die Gesamtlänge der Trägerplatte 2 beträgt daher mehr als 1 m.

Eine entsprechende Kunststoffplatte als plattenförmiges Teil 1 mit gleichen Abmaßen wie die gesamte Oberfläche 3 der Trägerplatte 2 wird zurechtgeschnitten und zwischen zwei Trägerplatten 2, 2' gelegt. Jede Trägerplatte 2 ist durch drei Druckluftbohrungen 12 durchzogen, von denen in jeden Bereich 5 innerhalb des Außenrandes 4 und der Zwischenrandstege 6 z.B. jeweils vier Gasführungsleitungen 11 abgehen, so daß die innere Oberfläche 9 der Trägerplatte 2 und damit die rückseitige Fläche des Einsatzes 8 gut belüftbar oder entlüftbar (Druckluft oder Vakuum) ist.

Die zwischen die zwei Trägerplatten 2, 2' eingelegte Kunststoffplatte als plattenförmiges Teil 1, welches zu erhitzen ist, liegt zunächst etwa entlang der gemeinsamen Linie 3 in Figur 2, d.h. zwischen den zwei Berührungsflächen. Um den Zustand der Figur 1 zu erreichen, wird nun Druckluft von rechts in Richtung der Pfeile 13 aus den Mündungsöffnungen 10 nach links in die Einsätze 8 und durch diese hindurch in den Raum der Ausnehmung 7 geblasen. Gleichzeitig wird in Richtung der Pfeile 14 auf der gegenüberliegenden Seite mit der Trägerplatte 2' Heißluft abgesaugt. Die eingeleitete Heißluft und die erwärmte Oberfläche der Trägerplatten erhitzen das plattenförmige Teil 1, welches sich in der in Figur 1 übertrieben gezeichneten Position nach links auf die Oberfläche im Bereich 5 des Einsatzes 8 anlegt.

Die beiden Trägerplatten 2, 2' können jetzt gut voneinander entfernt werden, und durch die Saugluft gemäß den Pfeilen 14 in der linken Trägerplatte 2' in Figur 1 kann man das plattenförmige Teil 1 anhaftend halten. Beispielsweise könnte die Trägerplatte 2' vertikal in eine andere Position bewegt werden und einer anderen Trägerplatte 2 danach gegenübergestellt werden, um z.B. in einen Zustand der Figur 2 zu gelangen.

Will man nun das weiter aufgewärmte plattenförmige Teil 1 in den Zustand bringen, wie in Figur 2 gezeigt ist, dann werden die Druck- und Saugluftströme umgesteuert, während das plattenförmige Teil 1 membranartig im Außenrand 4 festgeklemmt verbleibt. Aus der linken Trägerplatte 2' wird gemäß den Pfeilen 13' Druckluft hinter den Einsatz 8' geblasen, durch welchen sich das membranartig eingespannte, plattenförmige Teil 1 sofort abhebt und auf die Oberfläche des gegenüberliegenden Einsatzes 8 in der in Figur 2 gezeigten Weise anlegt. Dies wird noch begünstigt durch das Absaugen der Luft durch die rechte Trägerplatte 2 entsprechend der Pfeile 14'. Es versteht sich, daß man nun die linke Trägerplatte 2' abnehmen kann, während das plattenförmige, erhitzte Teil 1 an der rechten Trägerplatte 2 angesaugt gehalten werden kann.

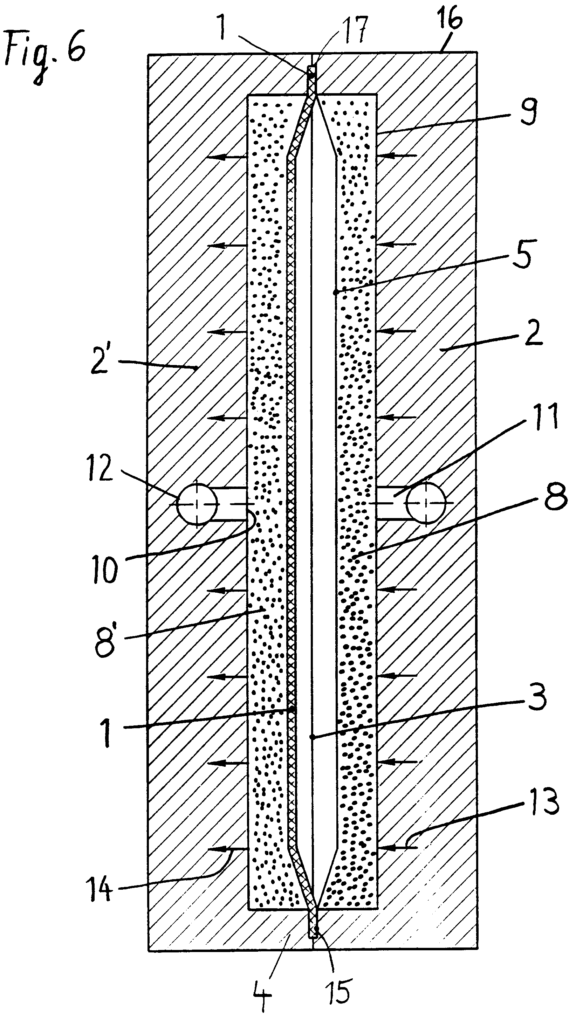

Die bevorzugte zweite Ausführungsform ist in den Figuren 6 bis 8 dargestellt. Dabei sind gleiche Teile mit gleichen Bezugszahlen versehen, so daß man die Ähnlichkeit der beiden Ausführungsformen erkennt.

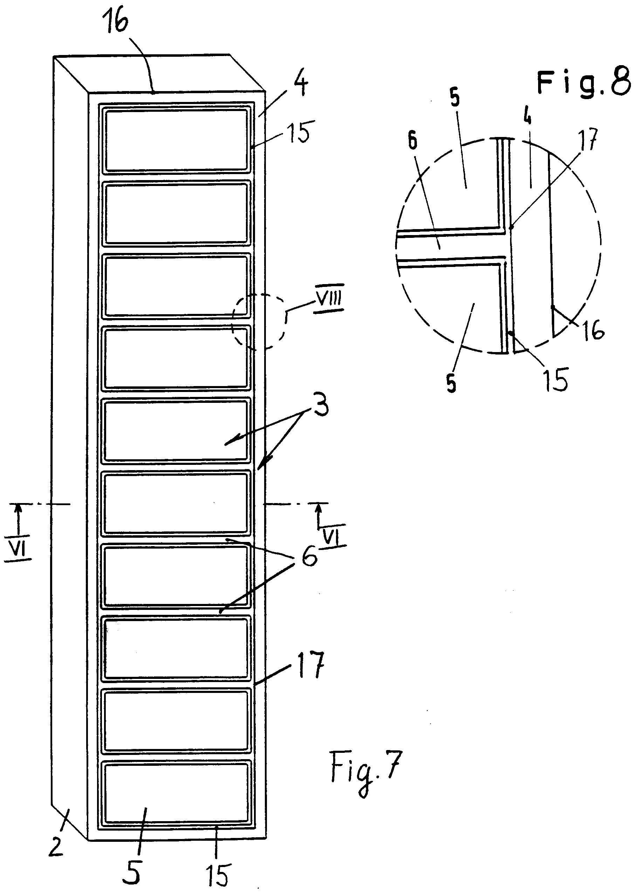

In Figur 7 ist die Trägerplatte nicht mit Druckluftbohrungen und Gasführungsleitungen gezeigt, man kann sich hier aber ähnliche Lösungen vorstellen wie bei der anderen Ausführungsform gemäß Figur 3, nur daß bei der zweiten Ausführungsform nach den Figuren 6 bis 8 weniger Gasführungsleitungen 11 in der inneren Oberfläche 9 der Trägerplatte 2 bzw. 2' münden.

So zeigt beispielsweise Figur 6 in jeder Trägerplatte 2 nur eine Druckluftbohrung 12 etwa in der Mitte, von der aus über die Länge verteilt einige Gasführungsleitungen 11 quer in Richtung auf die gesamte Berührungsfläche 3 sich erstrecken und mit ihrer jeweiligen Mündungsöffnung 10 in der inneren Oberfläche 9 münden.

Der größte und bedeutendste Unterschied zwischen der zweiten Ausführungsform nach den Figuren 6 bis 8 gegenüber der ersten besteht in einer kleinen Ausnehmung 15 im Außenrand 4 der jeweiligen Trägerplatte 2, 2'. Diese Ausnehmung 15 reicht nicht bis ganz an die Außenkante 16 der jeweiligen Trägerplatte sondern endet mit einer Stufe im Abstand vor dieser. Diese Stufe ist mit 17 bezeichnet und erscheint in den Figuren 7 und 8 als Linie. Außerhalb dieser Linie berühren sich die beiden Trägerplatten 2, 2', wie z.B. in Figur 6 dargestellt ist, ohne daß ein Werkstück dazwischenliegt, also ohne ein dazwischenliegendes plattenförmiges Teil 1. Der gesamte Außenrand 4 ist außen von der Linie 16 umrandet, und zwischen den Linien 16 und 17 liegen die beiden Werkzeugteile, d.h. also die beiden Trägerplatten 2 und 2' mit Preßkraft aufeinander. Die Tiefe der rahmenförmigen Ausnehmung 15 ist größer gewählt als die halbe Dicke des Werkstückes, also des plattenförmigen Teils 1. Darausfolgt, daß im Bereich der Ausnehmung 15 das plattenförmige Teil 1 ohne jede Preßkraft auch dann aufgenommen wird, wenn die beiden Trägerplatten 2, 2' mit hohem Druck gegeneinander liegen und gegeneinander gepreßt werden.

Bei dieser Ausführungsform ist also im Gegensatz zu der vorherigen dafür gesorgt, daß das plattenförmige Teil 1 nicht durch mechanische Kräfte im Randbereich zwischen den Linien 17 und 16 angepreßt wird. Der Vorteil dieser zuletzt beschriebenen Ausführungsform nach den Figuren 6 bis 8 besteht darin, daß nach dem Erwärmen das plattenförmige Teil 1 sich zuverlässig und exakt von der jeweiligen Trägerplatte löst, auch im Randbereich. Weil sich das Werkstück, d.h. das plattenförmige Teil 1 bei der Erwärmung etwas ausdehnt, ist die Tiefe der Ausnehmung 15 etwas größer als die halbe Dicke des Werkstückes, d.h. des plattenförmigen Teils 1. Im zusammengefahrenen Zustand der Figur 6 ist die Gesamthöhe beider Ausnehmungen 15 etwa 1/10 Millimeter bis 5/100 Millimeter größer als die Dicke des plattenförmigen Teils 1, d.h. die Materialstärke. Auch bei Erwärmung wird also mit Vorteil vermieden, daß das Werkstück durch mechanische Kräfte angepreßt wird, obgleich im zusammengefahrenen Zustand der Figur 6 die Trägerplatten 2, 2' außen am Rand im wesentlichen eine Abdichtung vorsehen.

Anstelle des porösen Einsatzes 8 kann man die Luft oder das Gas aus den Gasführungsleitungen 11 auch durch feine Schlitze auf das plattenförmige Teil 1 aufbringen.

## Patentansprüche

1. Vorrichtung zum Erhitzen von plattenförmigen Teilen aus tiefziehfähigem Kunststoff, wobei zwei Trägerplatten (2, 2') wenigstens senkrecht zu einer gemeinsamen Berührungsfläche (3) relativ zueinander bewegbar sind und Gasführungsleitungen (11) in der Oberfläche der Trägerplatte (2, 2') münden, dadurch gekennzeichnet, daß die Berührungsfläche (3) beider Trägerplatten (2, 2') jeweils von einem rahmenförmigen, geschlossenen Außenrand (4) ohne Mündungsöffnungen der Gasführungsleitungen (11) gebildet ist, wobei dieser Außenrand (4) am Umfang des plattenförmigen Teiles (1) eine Gassperre bildet, daß die Gasführungsleitungen (11) im Bereich (5) innerhalb des Außenrandes (4) münden und dem membranartigen Ablösen bzw. Ansaugen des Werkstückteiles (1) dienen und daß die Wärme von den zwei Trägerplatten (2, 2') durch körperlichen Kontakt und/oder warme Gase an das zu erhitzende Werkstückteil (1) herangebracht wird.

2. Vorrichtung nach Anspruch 1, dadurch gekennzeichnet, daß im Außenrand (4) der Trägerplatte (2, 2') im Abstand nach innen von der Außenkante (16) der Trägerplatte (2, 2') eine Stufe (17) zur Bildung einer die Ränder des plattenförmigen Werkstückteiles (1) aufnehmenden Ausnehmung (15) angebracht ist (Figuren 6 bis 8).

3. Vorrichtung nach Anspruch 1 oder 2, dadurch gekennzeichnet, daß die Oberfläche der Trägerplatte (2, 2') im Bereich (5) innerhalb des Außenrandes (4) wenigstens eine im Verhältnis zur Dicke (D) der Trägerplatte (2, 2') seichte Ausnehmung (7) aufweist.

4. Vorrichtung nach einem der Ansprüche 1 bis 3, dadurch gekennzeichnet, daß die Trägerplatte (2, 2') im Bereich (5) innerhalb des Außenrandes (4) mindestens einen wenigstens teilweise gasdurchlässigen Einsatz (8) mit einer Ausnehmung (7) zur freien Oberfläche hin aufweist.

5. Vorrichtung nach Anspruch 4, dadurch gekennzeichnet, daß der gasdurchlässige Einsatz (8, 8') aus porösem Sintermaterial besteht.

6. Vorrichtung nach Anspruch 4 oder 5, dadurch gekennzeichnet, daß die Berührungsfläche (3) zweier gegenüberliegender Trägerplatten (2, 2') eben ist, der jeweilige Einsatz (8, 8') plattenförmig ausgestaltet ist und die auf seiner Rückseite befindliche innere Oberfläche (9) der Trägerplatte (2, 2') Mündungsöffnungen (10) der Gasführungsleitungen (11) aufweist.

7. Vorrichtung nach einem der Ansprüche 1 bis 6, dadurch gekennzeichnet, daß die Berührungsfläche (3) jeder länglich ausgebildeten Trägerplatte (2, 2') im Bereich (5) innerhalb des Außenrandes (4) eine Reihe von im Abstand (b) zueinander angeordneten, parallelen Zwischenrandstegen (6) unter Bildung einer Vielzahl von Ausnehmungen (5) dazwischen aufweist.

8. Verwendung der Vorrichtung nach einem der Ansprüche 1 bis 7 zum Erhitzen und anschließenden Tiefziehen einer einseitig offenen Schale aus einem Zuschnitt aus tiefziehfähigem Kunststoff mit Tiefziehwerkzeug und Gegenbacken, die so bewegbar sind, daß sich die zwei Trägerplatten (2, 2') eine Zeit lang gegenüberstehen.

## Claims

1. Device for heating plate-like parts made from deep-drawable plastics, wherein two carrier plates (2, 2') are movable relative to one another at least perpendicularly with respect to a common contact surface (3) and gas supply lines (11) open out into the surface of the carrier plate (2, 2'), characterised in that the contact surface (3) of both carrier plates (2, 2') is formed by a respective frame-like, closed outside rim (4) without outlet apertures for the gas supply lines (11), wherein this outside rim (4) forms a gas barrier around the periphery of the plate-like part (1), that the gas supply lines (11) open out in the area (5) within the outside rim (4) and are for diaphragm-like releasing or suctioning of the workpiece (1) and that the heat from the two carrier plates (2, 2') is transferred to the workpiece (1) to be heated through contact and/or hot gases.

2. Device according to claim 1, characterised in that in the outside rim (4) of the carrier plate (2, 2'), at a distance towards the inside from the outside edge (16) of the carrier plate (2, 2'), a step (17) is arranged for forming a recess (15) for receiving the rims of the plate-like workpiece (1) (Figures 6 to 8).

3. Device according to claim 1 or 2, characterised in that the surface of the carrier plate (2, 2') has, in the area (5) within the outside rim (4), at least one recess (7) which is shallow in proportion to the thickness (D) of the carrier plate (2, 2').

4. Device according to one of claims 1 to 3, characterised in that the carrier plate (2, 2') has, in the area (5) within the outside rim (4) at least one at least partially gas permeable insert (8) with a recess (7) with respect to the free surface.

5. Device according to claim 4, characterised in that the gas permeable insert (8, 8') is composed of porous sintered material.

6. Device according to claim 4 or 5, characterised in that the contact surface (3) of two opposite carrier plates (2, 2') is planar, the respective insert (8, 8') is of a plate-like configuration and the inside surface (9) of the carrier plate (2, 2') located behind it is provided with gas supply line (11) outlet apertures (10).

7. Device according to one of claims 1 to 6, characterised in that the contact surface (3) of each elongated carrier plate (2, 2'), in the area (5) within the outside rim (4) has a row of parallel webs (6) between the rims arranged at a distance (b) from one another, forming a plurality of recesses (5) therebetween.

8. Use of the device according to one of claims 1 to 7 for heating and subsequent deep-drawing of a dish which is open on one side from a blank of deep-drawable plastics with a deep-drawing tool and counter jaws, which are movable so that the two carrier plates (2, 2') are opposite one another for a period of time.

## Revendications

1. Dispositif pour chauffer des pièces en forme de plaques constituées d'un matériau plastique pouvant subir un emboutissage profond, dans lequel deux plaques supports (2, 2') peuvent se déplacer l'une par rapport à l'autre, au moins perpendiculairement à une surface de contact commune (3), des conduites d'écoulement de gaz (11) débouchant dans la surface de la plaque support (2, 2'), caractérisé en ce que la surface de contact (3) de chacune des deux plaques supports (2, 2') est formée d'un bord extérieur fermé (4) en forme de cadre, sans ouvertures pour les conduites d'écoulement de gaz (11), le bord extérieur (4) formant une barrière aux gaz au niveau de la périphérie de la pièce (1) en forme de plaque ; que les conduites d'écoulement de gaz (11) débouchent dans la zone (5) à l'intérieur du bord extérieur (4) et servent à détacher ou aspirer la pièce en oeuvre (1) comme une membrane ; et que la chaleur est, à partir des deux plaques supports (2, 2'), par contact solide et/ou par des gaz chauds, appliquée à la pièce en oeuvre (1) destinée à être chauffée.

2. Dispositif selon la revendication 1, caractérisé en ce que, dans le bord extérieur (4) de la plaque support (2, 2'), à distance vers l'intérieur à partir de l'arête extérieure (16) de la plaque support (2, 2'), est rapporté un étagement (17) destiné à former un évidement (15) qui va recevoir les bords d'une pièce en oeuvre (1) en forme de plaque (Figures 6 à 8).

3. Dispositif selon la revendication 1 ou 2, caractérisé en ce que la surface de la plaque support (2, 2') présente, dans la zone (5) à l'intérieur du bord extérieur (4), au moins un évidement (7) ayant une faible profondeur par rapport à l'épaisseur (D) de la plaque support (2, 2').

4. Dispositif selon l'une des revendications 1 à 3, caractérisé en ce que la plaque support (2, 2') présente dans la zone (5) à l'intérieur du bord extérieur (4) au moins une garniture (8), au moins partiellement perméable aux gaz, présentant un évidement (7) vers la surface libre.

5. Dispositif selon la revendication 4, caractérisé en ce que la garniture perméable aux gaz (8, 8') est constituée d'un matériau fritté poreux.

6. Dispositif selon la revendication 4 ou 5, caractérisé en ce que la surface de contact (3) de deux plaques supports opposées (2, 2') est plane, la garniture (8, 8') correspondante a la forme d'une plaque, et la surface intérieure (9), se trouvant sur la face arrière, de la plaque support (2, 2') comporte des ouvertures (10) destinées aux conduites d'écoulement de gaz (11).

7. Dispositif selon l'une des revendications 1 à 6, caractérisé en ce que la surface de contact (3) de chaque plaque support (2, 2') de grande longueur comporte dans la zone (5) à l'intérieur du bord extérieur (4) une série de traverses intermédiaires parallèles (6), disposées à une distance (b) les unes des autres, avec formation, entre elles, d'un grand nombre d'évidements (5).

8. Utilisation du dispositif selon l'une quelconque des revendications 1 à 7, pour chauffer puis emboutir une coque ouverte sur un côté, à partir d'une découpe d'un matériau emboutissable, avec un moule d'emboutissage et des contre-mâchoires, qui peuvent se déplacer de façon que les deux plaques supports (2, 2') soient opposées l'une à l'autre pendant un certain laps de temps.
